# EUROPEAN PATENT SPECIFICATION

(11) **EP 4 480 207 B1**
(45) Date of publication and mention of the grant of the patent: **27.08.2025**
(21) Application number: 22714408.6
(22) Date of filing: 11.03.2022
(51) Int. Cl.: H04W 12/80, H04L 9/40

(54) **COMMUNICATION NETWORK DEVICES, MONITORING SYSTEM AND METHODS**
KOMMUNIKATIONSNETZWERKGERÄTE, ÜBERWACHUNGSSYSTEM UND METHODEN
DISPOSITIF DU RESEAU DE COMMUNICATION, SYSTEME DE SURVEILLANCE ET METHODES

(43) Date of publication of application: 25.12.2024
(73) Proprietor: Telefonaktiebolaget LM Ericsson (publ), 164 83 Stockholm (SE)
(72) Inventor: ATTANASIO, Francesco, 84086 Roccapiemonte (SA) (IT); GAITO, Daniele, 84016 Pagani (IT); DE MASI, Maurizio, 80061 Massa Lubrense (Naples) (IT)
(74) Representative: Ericsson
(86) International application number: PCT/EP2022/056397
(87) International publication number: WO 2023/169693

(56) References cited:
- WO-A1-2020/263141
- AQSACOM S A S: "Comments and edits to draft ETSI GR NFV-SEC 11 V0.0.9A (2017-06)", vol. WG - NFV SEC - Security, 1 July 2017 (2017-07-01), pages 1 - 51, XP014297306, Retrieved from the Internet <URL:docbox.etsi.org\ISG\NFV\SEC\05-CONTRIBUTIONS\2017\2017_07_20_WG_NFVSEC#105\NFVSEC(17)000100_Comments_and_edits_to_draft_ETSI_GR_NFV-SEC_11_V0_0_9A__2017.zip\NFV SEC 011 v009A_Restructuring_BRE.docx> [retrieved on 20170701]
- GARY S. SETTLES: "Sniffers: Fluid-Dynamic Sampling for Olfactory Trace Detection in Nature and Homeland Security—", JOURNAL OF FLUIDS ENGINEERING, vol. 127, no. 2, 31 March 2005 (2005-03-31), pages 189 - 218, XP055144975, ISSN: 0098-2202, DOI: 10.1115/1.1891146

## Description

### TECHNICAL FIELD

The invention relates to communication network devices hosting a monitoring administration function, M-ADMF, a point of monitoring, POM, and a data senses function, DSF, network element, respectively. The invention further relates to a monitoring system comprising communication network devices hosting monitoring administration function, M-ADMF, point of monitoring, POM, and data senses function, DSF, network elements. The invention further relates to a computer program, a computer program product and a method of operating an M-ADMF, a method of operating a POM, and a method of operating a DSF.

### BACKGROUND

Lawful Interception of telecommunications by a Law Enforcement Agency, LEA, is defined in various ETSI and 3GPP standards. LEA is an organization authorized by a lawful authorization based on the applicable jurisdiction to request and receive the results of telecommunications interceptions of an interception target. The target is a person of interest and/or user equipment possessed or used by the person of interest being surveyed by the LEA.

3GPP standard TS 33.127, such as in V16.6.0, specifies the architecture and functions required to support Lawful Interception of communications in 3GPP networks. ETSI standard GR NFV-SEC 011 V1.1.1, in particular section 6.2.1, describes a high-level architecture for lawful interception in a virtualized environment. Entities are logically represented, therefore it does not necessary reflect separate physical entities. The LI system comprises a LEA network and a Communications Service Provider, CSP, network. The LEA communicates with the CSP network through a network interface, called Handover Interface, HI. LEA comprises a Warrant Issuing Authority/Warrant Issuing Authority device and a Law Enforcement Monitoring Facility, LEMF. The Warrant Issuing Authority issues an intercept request, e.g., lawful authorization or warrant to the CSP through a first Handover Interface, HI1. The LEMF collects the intercepted information of the interception target. The LEMF communicates with an LI site through a second Handover Interface, HI2, for receiving Intercept Related Information, IRI, and through a third Handover Interface, HI3, for receiving Content of Communication, CC. Interfaces HI1, HI2, and HI3 are specified in more detail in the ETSI TS 102 232-1 V3.21.1 standard, "Lawful Interception (LI); Part 1: Internal Network Interface X1 for Lawful Interception".

The LI site comprises an LI Administration Function, ADMF, and a Mediation and Delivery Function, MF/DF. The LI ADMF communicates with the MF/DF through an X1_2 interface and an X1_3 interface. IRI are collection of information or data associated with telecommunications services involving the interception target identity, specifically call associated information or data (e.g., unsuccessful call attempts), service associated information or data (e.g., service profile management by subscriber) and location information. The CC is information exchanged between two or more users of a telecommunications service, excluding IRI. The MF receives IRI and CC and transforms them from internal interface format to Handover Interface format. The DF will then handle dispatching of said data to the one or more designated LEAs.

Mission Critical Services, MCSs, telecommunication services are services that require preferential handling compared to normal telecommunication services, e.g., in support of public safe agencies or critical infrastructure industries. MCSs can be used for public safety applications such as first responders and also for general commercial applications by critical infrastructure industries, such as utility companies and rail transport industries. MCS Protocol specification is provided in 3GPP standard TS 24.481, such as in version 16.3.0 Release 16.

WO 2020/263141 A1 discloses a method performed by a node for connecting at least two LI sites to one and the same physical network function. The node is adapted to configure Points Of Interception (POls)/virtualised POls/Trigger Control Functions according to LI sites requests and policy requirements for each LI site.

### SUMMARY

It is an object to enable improved monitoring for public safety, security or defence purposes.

A first aspect provides a communication network device hosting a monitoring administration function, M-ADMF, network element, NE. The communication network device comprises interface circuitry, at least one processor and memory comprising instructions executable by the at least one processor whereby the communication network device is operative as follows. The communication network device is operative to receive, from a public agency, PA, a monitoring activation request message on a handover interface of a communication network. The monitoring activation request message includes event reporting information parameters. The event reporting information parameters include information identifying a monitoring target and at least one event type, occurrence of which at the monitoring target the PA is requesting to receive notification of. The communication network device is further operative to send an activate task message to a point of monitoring, POM, on a first internal communication interface of the communication network. The activate task message includes the event reporting information parameters received in the monitoring activation request message.

The communication network device hosting an M-ADMF NE may enable reporting of relevant monitoring events to Public Safety, Defence Agencies and Critical Infrastructure industries, to prevent environmental crimes and enhance public safety and investigation capabilities. The communication network device may enable Public Safety and Defence Agencies to obtain actionable investigation insights from monitoring target related impacting events. The communication network device may enable improved protection of critical assets in a complete mission critical solution. The communication network device may enable public authorities to monitor dynamically one or more location areas of interest allowing them to plan an appropriate emergency response. The communication network device may enable public authorized authorities to prevent disasters or crimes more effectively and more easily compared to previous technologies.

In an embodiment, the monitoring target is at least one of a geographic area, a building, or a structure. The communication network device may enable improved protection of critical buildings, structures or sensitive geographic areas.

In an embodiment, the at least one event type is at least one of pollution detection, explosive material detection, flammable material detection, natural gas emission detection, toxic gas leak detection, toxic spill, spoilage or contamination detection, biological weapon detection, chemical weapon detection or drug detection. The communication network device may enable Public Safety and Defence Agencies to obtain actionable investigation insights from wide range of impacting events.

In an embodiment, the handover interface has an HI1 lawful interception handover interface format. The first internal communication interface has an X1 lawful interception internal network interface format. This may ensure that communications are secure and may enable the communication network device to be incorporated within a lawful interception, LI, system.

In an embodiment, the M-ADMF NE includes a monitoring control function, MCF, and a monitoring provisioning function, MPF. The communication network device is operative to receive, at the MCF, the monitoring activation request message on the handover interface. The communication network device is further operative to obtain the event reporting information parameters from the monitoring activation request message and to provide the event reporting information parameters to the MPF. The communication network device is operative to send the activate task message from the MPF to the POM on the first internal communication interface.

In an embodiment, the communication network device is further operative to form the activate task message by mapping the information identifying a monitoring target and the at least one event type from the monitoring activation request message into the activate task message.

Corresponding embodiments and advantages apply also to the monitoring system and the method of operating an M-ADMF described below.

A second aspect provides a communication network device hosting a point of monitoring, POM, network element, NE. The communication network device comprises interface circuitry, at least one processor and memory comprising instructions executable by the at least one processor whereby the POM NE is operative as follows. The communication network device is operative to receive, from a monitoring administration function, M-ADMF, an activate task message on a first internal communication interface of a communication network. The activate task message includes event reporting information parameters. The event reporting information parameters include information identifying a monitoring target and at least one event type, occurrence of which at the monitoring target a public agency, PA, has requested to receive notification of. The communication network device E is further operative to send an event information request message to a data senses function, DSF, of the communication network. The event information request message includes the event reporting information parameters received in the activate task message. The communication network device is further operative to receive event notification messages from the DSF. The event notification messages include event information. The event information includes information identifying a monitoring target at which at least one event has been detected and at least one event type detected at the monitoring target.

The communication network device hosting a POM NE may enable reporting of relevant monitoring events to Public Safety, Defence Agencies and Critical Infrastructure industries, to prevent environmental crimes and enhance public safety and investigation capabilities. The communication network device may enable Public Safety and Defence Agencies to obtain actionable investigation insights from monitoring target related impacting events. The communication network device may enable improved protection of critical assets in a complete mission critical solution. The communication network device may enable public authorities to monitor dynamically one or more location areas of interest allowing them to plan an appropriate emergency response. The communication network device may enable public authorized authorities to prevent disasters or crimes more effectively and more easily compared to previous technologies.

In an embodiment, the communication network device is further operative to send a monitoring related information, MRI, message to a mediation function on a second internal communication interface of the communication network. The MRI message includes the event information.

In an embodiment, the second internal communication interface has an X2 lawful interception internal network interface format. This may ensure that communications are secure and may enable the communication network device to be incorporated within a lawful interception, LI, system.

In an embodiment, the POM NE is further operative to form the event information request message by mapping the event reporting information parameters from the activate task message into the event information request message.

Corresponding embodiments and advantages apply also to the monitoring system and the method of operating a POM described below.

A third aspect provides a communication network device hosting a data senses function, DSF, network element, NE. The communication network device comprises interface circuitry, at least one processor and memory comprising instructions executable by the at least one processor whereby the communication network device is operative as follows. The communication network device is operative to receive, from a point of monitoring, POM, an information request message on an internal communication interface of a communication network. The information request message includes event reporting information parameters. The event reporting information parameters include information identifying a monitoring target and at least one event type, occurrence of which at the monitoring target a public agency, PA, has requested to receive notification of. The communication network device is further operative to receive event data from at least one electronic sense function, ESF, on a further internal communication interface of the communication network. Event data includes monitoring locations and senses data detected at monitoring locations. The communication network device is further operative to determine that received event data includes a monitoring location matching the monitoring target and senses data detected at said monitoring location matching the at least one event type occurrence of which the PA has requested to receive notification of. The communication network device is further operative to, in response to said determining, send an event notification message to the POM. The event notification message includes event information. The event information includes information identifying the monitoring location matching the monitoring target and the at least one event type detected at said monitoring location matching the at least one event type occurrence of which the PA has requested to receive notification of.

The communication network device hosting a DSF may advantageously determine the occurrence of monitoring target related impacting events based on received senses data. The communication network device hosting a DSF NE may enable reporting of relevant monitoring events to Public Safety, Defence Agencies and Critical Infrastructure industries, to prevent environmental crimes and enhance public safety and investigation capabilities. The communication network device may enable Public Safety and Defence Agencies to obtain actionable investigation insights from monitoring target related impacting events. The communication network device may enable improved protection of critical assets in a complete mission critical solution. The communication network device may enable public authorities to monitor dynamically one or more location areas of interest allowing them to plan an appropriate emergency response. The communication network device may enable public authorized authorities to prevent disasters or crimes more effectively and more easily compared to previous technologies.

In an embodiment, the communication network device is further operative to determine that triggering of new senses data collection by the at least one ESF is required and in response to said determining, send a senses data trigger message to the at least one ESF.

In an embodiment, the at least one ESF is at least one of an electronic nose function, ENF, operative to receive smell data from an electronic nose, an electronic tongue function, ETF, operative to receive taste data from an electronic tongue, and an electronic eye function, EEF, operative to receive visual data from an electronic eye. The communication network device hosting a DSF may advantageously determine the occurrence of monitoring target related impacting events based on received senses data, including one or more of smell data, taste data and visual data. The communication network device may enable improved detection of events impacting critical buildings or structures, or sensitive geographical areas, which may enable improved public safety, security, crime prevention or crime detection.

Corresponding embodiments and advantages apply also to the monitoring system and the method of operating a DSF described below.

A fourth aspect provides a monitoring system comprising a first communication network device hosting a monitoring administration function, M-ADMF, network element, NE, a second communication network device hosting a point of monitoring, POM, network element, NE, and third communication network device hosting a data senses function, DSF, network element, NE. The first communication network device comprises interface circuitry, at least one processor and memory comprising instructions executable by the at least one processor whereby the first communication network device is operative as follows. The first communication network device is operative to receive, from a public agency, PA, a monitoring activation request message on a handover interface of a communication network. The monitoring activation request message includes event reporting information parameters. The event reporting information parameters include information identifying a monitoring target and at least one event type, occurrence of which at the monitoring target the PA is requesting to receive notification of. The first communication network device is further operative to send an activate task message to the POM NE, on a first internal communication interface of the communication network. The activate task message includes the event reporting information parameters received in the monitoring activation request message. The second communication network device comprises interface circuitry, at least one processor and memory comprising instructions executable by the at least one processor whereby the second communication network device is operative as follows. The second communication network device is operative to receive, from the M-ADMF, the activate task message on the first internal communication interface of the communication network. The activate task message includes the event reporting information parameters. The second communication network device is further operative to send an event information request message to the DSF. The event information request message includes the event reporting information parameters received in the activate task message. The second communication network device is further operative to receive event notification messages from the DSF. The event notification messages include event information. The event information includes information identifying a monitoring target at which at least one event has been detected and at least one event type detected at the monitoring target. The third communication network device comprises interface circuitry, at least one processor and memory comprising instructions executable by the at least one processor whereby the third communication network device is operative as follows. The third communication network device is operative to receive, from the POM, the information request message on the internal communication interface of the communication network. The information request message includes the event reporting information parameters. The third communication network device is further operative to receive event data from at least one electronic sense function, ESF, on a further internal communication interface of the communication network. Event data includes monitoring locations and senses data detected at monitoring locations. The third communication network device is further operative to determine that received event data includes a monitoring location matching the monitoring target and senses data detected at said monitoring location matching the at least one event type occurrence of which the PA has requested to receive notification of. The third communication network device is further operative to, in response to said determining, send an event notification message to the POM. The event notification message includes event information. The event information includes information identifying the monitoring location matching the monitoring target and the at least one event type detected at said monitoring location matching the at least one event type occurrence of which the PA has requested to receive notification of.

The monitoring system may enable reporting of relevant monitoring events to Public Safety, Defence Agencies and Critical Infrastructure industries, to prevent environmental crimes and enhance public safety and investigation capabilities. The monitoring system may enable Public Safety and Defence Agencies to obtain actionable investigation insights from target related impacting events. The monitoring system may enable improved protection of critical assets in a complete mission critical solution. The monitoring system may enable public authorities to monitor dynamically one or more location areas of interest allowing them to plan an appropriate emergency response. The monitoring system may enable public authorized authorities to prevent disasters or crimes more effectively and more easily compared to previous technologies.

In an embodiment, the monitoring system further comprises at least one fourth communication network device hosting an electronic sense function, ESF, network element. The fourth communication network device comprising interface circuitry, at least one processor and memory comprising instructions executable by the at least one processor whereby the fourth communication network device is operative to receive sense data from a sensing device and send the sense data to the DSF.

In an embodiment, the ESF is one of an electronic nose function, ENF, operative to receive smell data from an electronic nose sensing device, an electronic tongue function, ETF, operative to receive taste data from an electronic tongue sensing device, and an electronic eye function, EEF, operative to receive visual data from an electronic eye sensing device.

A fifth aspect provides a method of operating a monitoring administration function, M-ADMF. The method comprises receiving, from a public safety agency, PA, a monitoring activation request message on a handover interface of a communication network. The monitoring activation request message includes event reporting information parameters. The event reporting information parameters include information identifying a monitoring target and at least one event type, occurrence of which at the monitoring target the PA is requesting to receive notification of. The method further comprises sending an activate task message to a point of monitoring, POM, on a first internal communication interface of the communication network. The activate task message includes the event reporting information parameters received in the monitoring activation request message.

A sixth aspect provides a method of operating a point of monitoring, POM. The method comprises receiving, from a monitoring administration function, M-ADMF, an activate task message on a first internal communication interface of a communication network. The activate task message includes event reporting information parameters. The event reporting information parameters include information identifying a monitoring target and at least one event type, occurrence of which at the monitoring target a public safety agency, PA, has requested to receive notification of. The method further comprises sending an event information request message to a data senses function, DSF, of the communication network. The event information request message includes the event reporting information parameters received in the activate task message. The method further comprises receiving event notification messages from the DSF. The event notification messages include event information. The event information includes information identifying a monitoring target at which at least one event has been detected and at least one event type detected at the monitoring target.

A seventh aspect provides a method of operating a data senses function, DSF. The method comprises receiving, from a point of monitoring, POM, an information request message on an internal communication interface of a communication network. The information request message includes event reporting information parameters. The event reporting information parameters include information identifying a monitoring target and at least one event type, occurrence of which at the monitoring target a public safety agency, PA, has requested to receive notification of. The method further comprises receiving event data from at least one electronic sense function, ESF, on a further internal communication interface of the communication network. Event data includes monitoring locations and senses data detected at monitoring locations. The method further comprises determining that received event data includes a monitoring location matching the monitoring target and senses data detected at said monitoring location matching the at least one event type occurrence of which the PA has requested to receive notification of. The method further comprises in response to said determining, sending an event notification message to the POM. The event notification message includes event information. The event information includes information identifying the monitoring location matching the monitoring target and the at least one event type detected at said monitoring location matching the at least one event type occurrence of which the PA has requested to receive notification of.

An eighth aspect provides a computer program comprising instructions which when performed by at least one processor cause the at least one processor to perform steps of the above method of operating a monitoring administration function, M-ADMF.

A ninth aspect provides a computer program comprising instructions which when performed by at least one processor cause the at least one processor to perform steps of the above method of operating a point of monitoring, POM.

A tenth aspect provides a computer program comprising instructions which when performed by at least one processor cause the at least one processor to perform steps of the above method of operating a data senses function, DSF.

Embodiments of the invention will now be described, by way of example only, with reference to the accompanying drawings.

### BRIEF DESCRIPTION OF THE DRAWINGS

Figure 1 is a block diagram illustrating an embodiment of a communications network device hosting a monitoring administration function, M-ADMF, network element, NE;
Figure 2 is a block diagram illustrating an embodiment of a communications network device hosting a point of monitoring, POM, network element, NE;
Figure 3 is a block diagram illustrating an embodiment of a communications network device hosting a data senses function, DSF, network element, NE;
Figure 4 is a block diagram illustrating an embodiment of a communications network device hosting an electronic sense function, ENF, network element, NE;
Figures 5 and 6 are block diagrams illustrating embodiments of a monitoring system;
Figures 7 to 9 are flowcharts illustrating embodiments of method steps; and
Figures 10 and 11 are signalling diagrams illustrating an exchange of signals in an embodiment of a monitoring system.

### DETAILED DESCRIPTION

The same reference numbers are used for corresponding features in different embodiments.

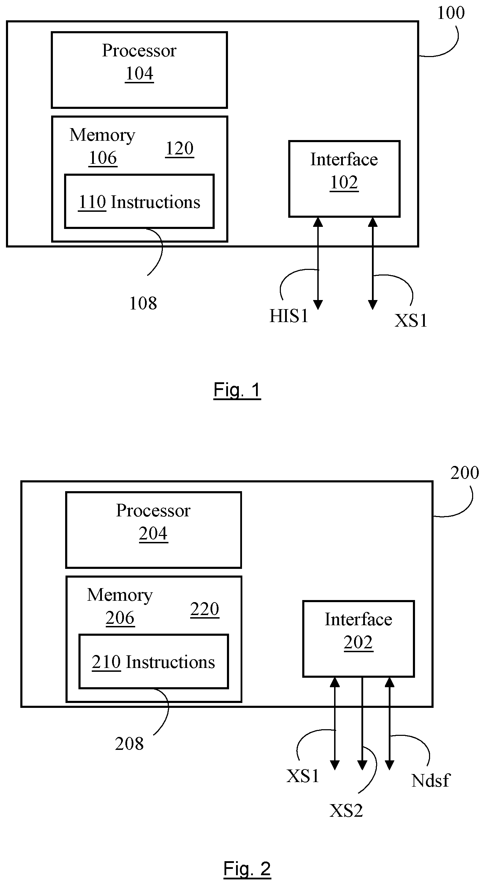

Referring to Figure 1, an embodiment provides a communication network device 100 hosting a monitoring administration function, M-ADMF, network element, NE. The communication network device comprises interface circuitry 102, a processor 104 and memory 106. The memory comprises instructions 110 executable by the at least one processor whereby the communication network device 100 is operative to receive a monitoring activation request message from a public agency, PA. The PA may, for example, be a public safety agency, PSA, or a Defence Agency, DA.

The monitoring activation request message is received on a handover interface of a communication network. The monitoring activation request message includes event reporting information parameters, which include:
- information identifying a monitoring target; and
- at least one event type, occurrence associated with the monitoring target the PA is requesting to receive notification of.

The communication network device is further operative to send an activate task message to a point of monitoring, POM, on a first internal communication interface of the communication network. The activate task message includes the event reporting information parameters received in the monitoring activation request message.

In an embodiment, the monitoring target is at least one of a geographic area, a building, or a structure. For example, buildings, sensitive geographic areas, critical structures such as dams, bridges, roads, rail networks, ports, airports, mines, utilities infrastructure, etc.

In an embodiment, the at least one event type is at least one of pollution detection, explosive material detection, flammable material detection, natural gas emission detection, toxic gas leak detection, toxic spill, spoilage or contamination detection, biological weapon detection, chemical weapon detection or drug detection.

In an embodiment, the handover interface has an HI1 lawful interception handover interface format and is referred to herein as the handover interface for senses 1, HIS1. The first internal communication interface has an X1 lawful interception internal network interface format and is referred to herein as the internal communication interface for senses 1, XS1.

The HI1 lawful interception handover interface is the interface for warrant information; it is specified in ETSI TS 103 120, such as in V1.10.1. The X1 lawful interception internal network interface allows a Lawful Interception system to provision tasks on a Network Function (NF); it is specified in ETSI TS 103 221-1, such as in V1.7.1.

In an embodiment, the monitoring activation request message is a Monitoring TaskObject received from the PA on HIS1. The Monitoring TaskObject includes the event reporting information parameters in a number of Fields, as detailed in Table 1:

**Table 1: List of fields in Monitoring TaskObject**

| **Field** | **Description** |
|---|---|
| **Reference** | Monitoring Identifier (MID) assigned to the product of task. |
| **TimeSpan** | Indicates the period for which task should occur, as well as provisioning and deprovisioning times. |
| **DeliveryDetails** | Destination(s) for the filtered Monitoring data. |
| **CSPID** | Describes the Communication Service Provider, CSP, required to implement the Task |
| **TypeofMonitoring** | The at least one event type which the PA is subscribing to receive notification of, e.g.: pollution detection, explosive material detection, flammable material detection, natural gas emission detection, toxic gas leak detection, toxic spill, spoilage or contamination detection, biological weapon detection, chemical weapon detection, drug detection. |
| **Monitoringldentifier** | The technical identifier used to identify the monitoring target of task. |

The DeliveryDetails field associates the Monitoring TaskObject to a Public Safety Monitoring Facility (PSMF)/Defense Agency Monitoring Facility (DAMF), to which event information is to be sent, as described in further detail with respect to the DSF and POM below. The DeliveryDetails field has a *List of DeliveryDestination structures* format as detailed at clause 8.2.8.2 of ETSI TS 103 120, such as in V1.10.1.

In an embodiment, the activate task message is an ActivateTaskRequest message sent on the XS1 internal communication interface. The ActivateTaskRequest message includes a message definition, type of request being made and the event reporting information parameters in a number of request Fields, as detailed in Table 2:

**Table 2: List of fields in ActivateTaskRequest message**

| **Field** | **Description** |
|---|---|
| **ADMF Identifier** | Identifies the ADMF uniquely to the NE. Required to match the details provided by the ADMF's X.509 certificate |
| **Server Identifier** | Uniquely identifies the Server to the ADMF. |
| **MessageTimestamp** | Timestamp indicating the time the message was sent by the requester |
| **Version** | Version of the present document used for encoding the message |
| **XS1TransactionID** | Used to correlate Request and Response. |
| **XID** | Monitoring Identifier (MID) assigned to the product of task. |
| | Uniquely identifies the Task; there may be more than one different Task relating to the same target identifier (two distinct XIDs). |
| **Monitoringldentifier** | The technical identifier used to identify the monitoring target of task. |
| **ListOfDIDs** | List of Destination Identifiers (DID) referencing the desired delivery destination records. |
| **TypeofMonitoring** | The at least one event type which the PA is subscribing to receive notification of, e.g.: pollution detection, explosive material detection, flammable material detection, natural gas emission detection, toxic gas leak detection, toxic spill, spoilage or contamination detection, biological weapon detection, chemical weapon detection, drug detection. |

In an embodiment, the M-ADMF includes a monitoring control function, MCF, and a monitoring provisioning function, MPF. The communication network device is operative to receive the monitoring activation request message at the MCF on the handover interface. The communication network device is also operative to obtain the event reporting information parameters from the monitoring activation request message and provide the event reporting information parameters to the MPF. The communication network device is operative to send the activate task message from the MPF to the POM on the first internal communication interface.

In an embodiment, the communication network device is further operative to form the activate task message by mapping the information identifying a monitoring target and the at least one event type from the monitoring activation request message into the activate task message.

In an embodiment, referring to Table 1 and Table 2, an ActivateTaskRequest message is formed by mapping the Monitoringldentifier and TypeOfMonitoring field contents from the Monitoring TaskObject into the ActivateTaskRequest message.

In an embodiment, the XS1 ActivateTaskRequest message has an XML format. For example, the ActivateTaskRequest message may have the following format:

```
 <RequestContainer>
 <XS1Request>
 <ADMF Identifier>admin8997</ADMF Identifier>
 <Server Identifier>E-NoseServer1</Server Identifier>
 <MessageTimestamp>2021-07-08T18:00:00.012345+02:00</MessageTimestamp>
 <Version>1.0.0</Version>
 <XS1TransactionID>765d2l48-f87a-35e3-b756-544513165012</XS1TransactionID>
 <ActiveTaskRequest>
 <XID>341f5467-e89b-21d3-b478-526624154111</XID>
 <Monitoringldentifiers>Land of Fires Area Street</Monitoringldentifiers>
 <TypeofMonitoring>pollution detection</TypeofMonitoring>
 <ListOfDIDs>10.139.120.137,10.120.140.221</ListOfDIDs>
 <ListOfMediationDetails></ListOfMediationDetails>
 <CorrelationID></CorrelationID>
 <ImplicitDeactivationAllowed>False</ImplicitDeactivationAllowed>
 <ProductID></ProductID>
 <TaskDetailsExtensions>
 </TaskDetailsExtensions>
 </ActiveTaskRequest>
 </XS1Request>
 </RequestContainer>
```

In a further example, the ActivateTaskRequest message may have the following format:

```
 <RequestContainer>
 <XS1Request>
 <ADMF Identifier>admin8997</ADMF Identifier>
 <Server Identifier>E-NoseServer8</Server Identifier>
 <MessageTimestamp>2021-07-13T19:00:00.012345+02:00</MessageTimestamp>
 <Version>1.0.0</Version>
 <XS1TransactionID>765d2l48-f87a-35e3-b756-544513165133</XS1TransactionID>
 <ActiveTaskRequest>
 <XID>341f5467-e89b-21d3-b478-526624154133</XID>
 <Monitoringldentifiers>Channel Dam </Monitoringldentifiers>
 <TypeofMonitoring> explosive material detection </TypeofMonitoring>
 <ListOfDIDs>10.139.120.138,10.120.140.222</ListOfDIDs>
 <ListOfMediationDetails></ListOfMediationDetails>
 <CorrelationID></CorrelationID>
 <ImplicitDeactivationAllowed>False</ImplicitDeactivationAllowed>
 <ProductID></ProductID>
 <TaskDetailsExtensions>
 </TaskDetailsExtensions>
 </ActiveTaskRequest>
 </XS1Request>
 </RequestContainer>
```

Referring to Figure 2, an embodiment provides a communication network device 200 hosting a point of monitoring, POM, network element, NE. The communication network device comprises interface circuitry 202, a processor 204 and memory 206 comprising instructions 210 executable by the at least one processor whereby the communication network device 200 is operative to receive an activate task message from a monitoring administration function, M-ADMF.

The activate task message is received on a first internal communication interface of a communication network. The activate task message includes event reporting information parameters, which include:
- information identifying a monitoring target; and
- at least one event type, occurrence associated with the monitoring target the PA is requesting to receive notification of.

The communication network device 200 is further operative to send an event information request message to a data senses function, DSF, of the communication network. The event information request message includes the event reporting information parameters received in the activate task message.

The communication network device 200 is further operative to receive event notification messages from the DSF. The event notification messages include event information including:
- information identifying a monitoring target at which at least one event has been detected; and
- at least one event type detected at the monitoring target.

In an embodiment, the event information request message is an Nndsf_Info_Request message and includes a number of request Fields, as detailed in Table 3:

**Table 3: List of fields in Nndsf_Info_Request message**

| **Field** | **Description** |
|---|---|
| **Notification Monitoring Address** | Allows the Event Receiving Network function to correlate notifications received from the Event provider with a subscription |
| **Monitoring Identifier of Event Reporting** | The technical identifier used to identify the monitoring target of task. |
| **notifUri** | List of Destination Identifiers (DID) referencing the desired delivery destination records. |
| **loSevSubsc** | The at least one event type which the PA is subscribing to receive notification of, e.g.: pollution detection, explosive material detection, flammable material detection, natural gas emission detection, toxic gas leak detection, toxic spill, spoilage or contamination detection, biological weapon detection, chemical weapon detection, drug detection. |

In an embodiment, the communication network device 200 is further operative to form the event information request message by mapping the event reporting information parameters from the activate task message into the event information request message.

In an embodiment, the communication network device 200 is operative to form a Nndsf_Info_Request message by mapping the event reporting information parameters from the ActivateTaskRequest message into the Nndsf_Info_Request message.

The communication network device 200 translates or maps the TypeofMonitoring field in the ActivateTaskRequest message to an loSevSubsc field of the Nndsf_Info_Request message. An loSevSubsc field identifies the type of event, for example Toxic Gases leak detection, being subscribed to. The communication network device also translates or maps the Monitoringldentifier field in the ActivateTaskRequest message to a Monitoring Identifier of Event Reporting field of the Nndsf_Info_Request message. Within a subscription all loSevSubsc may be associated with the same Monitoring Identifier of Event Reporting. The communication network device also translates or maps the ListOfDlDs field in the ActivateTaskRequest message to a notifUri field of the Nndsf_Info_Request message. A Notification Monitoring Address field allows the Event Receiving Network function to correlate notifications received from the Event provider with a subscription. The Nndsf_Info_Request message is applicable to both a 5G or a 6G DSF service operation.

The information in the ActivateTaskRequest message fields may be mapped into the Nndsf_Info_Request message fields as shown in Table 4 below:

**Table 4: Mapping of fields from ActivateTaskRequest to Nndsf_Info_Request**

| **ActivateTaskRequest Field** | **Nndsf_Info_Request field** |
|---|---|
| XID | InfolD |
| TypeofMonitoring | *loSevSubsc* |
| Monitoringldentifier | Monitoringld |
| ListOfDIDs | *notifUri* |

The DSF acknowledges the Nndsf_Info_Request to the POM and if the request can be parsed, the POM sends an ActivateTaskResponse to the M-ADMF on the XS1 interface. The ActivateTaskResponse may have an xml format as follows:

```
 <ResponseContainer>
 <XS1Response>
 <ActiveTaskResponse>
 </OK-Acknowledged and Completed>
 </<ActiveTaskResponse>
 </XS1Response>
 </ResponseContainer>
```

In an embodiment, the event notification messages received from the DSF are Ndsf_Delivery_Notify messages comprising a Mission Critical event report to the POM. The communication network device 200 is further operative to sends a Ndsf_Delivery_Notify_Ack message to DSF in to acknowledge receipt of a Ndsf_Delivery_ Notify message.

In an embodiment, the communication network device 200 is further operative to send a monitoring related information, MRI, message including the event information to a mediation function. The MRI message is sent on a second internal communication interface of the communication network.

In an embodiment, the second internal communication interface has an X2 lawful interception internal network interface format and is referred to herein as the internal communication interface for senses 2, XS2.

The X2 lawful interception internal network interface is used to transmit intercepted signalling within a Lawful Interception system; it is specified in ETSI TS 103 221-2, such as in V1.4.1.

In an embodiment, the MRI message is a Raw MRI message and the communication network device 200 is operative to translate or map fields of the Ndsf_Delivery_Notify message to fields of the Raw MRI message, to be sent over the XS2 interface. The contents of a Monitoring Target of Event Reporting field of the Ndsf_Delivery_Notify message are translated or mapped to a field Matched Monitoring Identifier of the Raw MRI message. The Monitoring Target of Event Reporting field may comprise a parameter or an enumerated value. The contents of a field evSubsc of the Ndsf_Delivery_ Notify message are translated or mapped to a field Event of the Raw IRI message. The field Event may comprise a parameter or an enumerated value related to a Monitored Event.

The Raw MRI message is sent from communication network device 200 to a mediation and delivery function 2, MDFS2. The Raw MRI message is sent as a binary stream of XS2 Protocol Data Units (PDUs). An example XS2 PDU format is shown in Table 5 and Table 6:

**Table 5: XS2 PDU Header fields**

| **Field** | Description |
|---|---|
| Version | The POM shall populate the Version field with the version of the specification used to create the PDU, given as a 16-bit unsigned integer. |
| PDU Type | XS2 PDU |
| Header Length | The POM shall populate the Header Length field with the length of the header in octets, including the mandatory and any conditional fields that have been populated |
| Payload Length | The POM shall populate the Payload Length field with the length of the Payload field in octets. |
| Payload Format | The POM shall indicate the format and encoding of the Payload field by setting the Payload Format field to the appropriate value. |
| ......... | |
| ......... | |
| XID | The MOI shall populate the XID field with the XID associated with the intercepted product, as assigned by the relevant XS1 interface. |

**Table 6: XS2 PDU Conditional Attributes**

| **Field** | **Description** |
|---|---|
| NFID | Network Function ID as received by PCF |
| Timestamp | If used, the POI shall populate the Timestamp field with the time that the content for the PDU was intercepted. |
| Matched Monitoring Identifier | location |
| ....... | |

The communication network device 200 is operative to populate the Raw MRI XS2 PDU Payload field with the event information.

An example of an xml format Raw MRI X2 PDU reporting a pollution detection event in the Payload is as follows:

```
 <PDU>
 <Version> current version<Version>
 <PDUType>2</PDUType>
 <HeaderLenght>variable</HeaderLenght>
 <PayloadLength>variable</PayloadLength>
 <PayloadFormat>4</PayloadFormat>
 <PayloadDirection>1<PayloadDirection>
 <XID>341f5467-e89b-21d3-b478-526624154111</XID>
 <CorrelationId><CorrelationId>
 <ConditionalAttribute>
 <NFID>EN_System_1</NFID>
 <Timestamp>2021-07-09T19:00:00.012345+02:00</Timestamp>
 <Matched Monitoring Identifier>Land of Fires Area Street 1</Matched Monitoring Identifier>
 </ConditionalAttribute>
    <Payload>
    <EventContent>
    <Event>PollutionDetection</Event>
        <monRespdata>
   <pollutant1>carbon monoxide</pollutant1>
   <pollutant2>sulfur oxides</pollutant2>
   <pollutant3>nitrogen oxides</pollutant3>
        </monRespdata>
      </EventContent>
    </Payload>
    </PDU>
```

Using the event information reported above, a PSA/DA could identify unauthorized rubbish dumps as a result of illegal waste burning. An xml format Raw MRI X2 PDU reporting an explosive material detection event may have a Payload as follows:

```
<Payload>
 <EventContent>
 <Event>ExplosiveMaterialDetection</Event>
 <monRespdata>
   <explosive1>Nitroglycerin</explosive1>
   <explosive2>RDX</explosive2>
   <explosive3>TNT</explosive3>
 </monRespdata>
 </EventContent>
 </Payload>
```

Using this event information, a PSA/DA may, for example, identify the detection of explosive material at a dam, due to a terrorist attack.

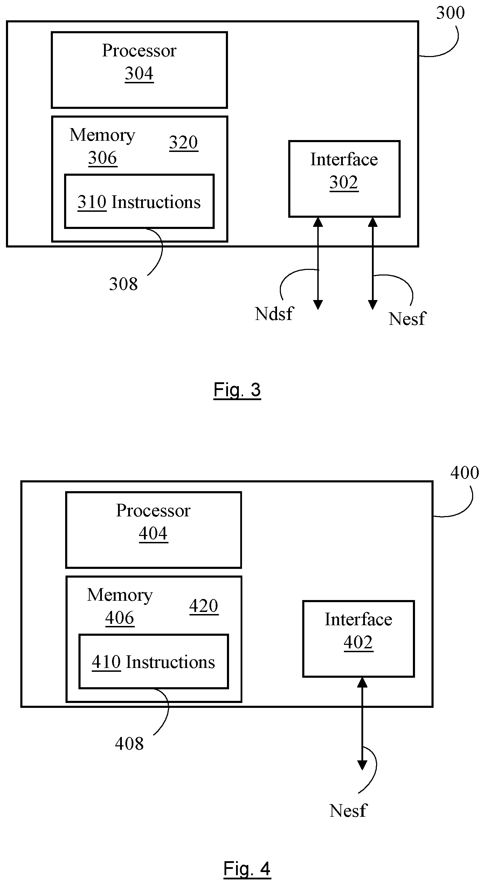

Referring to Figure 3, an embodiment provides a communication network device 300 hosting a data senses function, DSF, network element, NE. The communication network device comprises interface circuitry 302, a processor 304 and memory 306 comprising instructions 310 executable by the processor whereby the communication network device is operative to receive an information request message from a point of monitoring, POM.

The information request message is received on an internal communication interface of a communication network and includes event reporting information parameters including:
- information identifying a monitoring target; and
- at least one event type, occurrence associated with the monitoring target a public agency, PA, has requested to receive notification of.

The communication network device 300 is further operative to receive event data from at least one electronic sense function, ESF. The event data is received on a further internal communication interface of the communication network. The event data includes monitoring locations and senses data detected at monitoring locations.

The communication network device 300 is further operative to determine that received event data includes a monitoring location matching the monitoring target. The communication network device 300 is further operative to determine that senses data detected at the matched monitoring location matches the at least one event type occurrence of which associated with the matched monitoring location the PA has requested to receive notification of.

The communication network device 300 is further operative to, in response to said determining, send an event notification message to the POM. The event notification message includes event information including:
- information identifying the monitoring location matching the monitoring target; and
- the at least one event type detected at said monitoring location matching the at least one event type occurrence of which the PA has requested to receive notification of.

In an embodiment, communication network device 300 is operative to, in response to detecting one or more events subscribed to by the PA, send a Ndsf_Delivery_Notify message to the POM. The Ndsf_Delivery_Notify message includes a Mission Critical event report to the POM.

An event is detected if the communication network device determines that senses data detected at one or more matched monitoring locations matches the at least one event type occurrence of which associated with the matched monitoring locations the PA has requested to receive notification of. The communication network device may be operative to apply one or more Event filters to received monitoring locations and senses data, and to determine that an event has occurred for which one or more Event filters match. Event Filters may be used to specify a condition to match for notifying an event. For example, an event filter may specify a condition that "a List of parameters or enumeration values must match".

In an embodiment, the communication network device 300 is further operative to determine that triggering of new senses data collection by the at least one ESF is required and, in response, to send a senses data trigger message to the at least one ESF.

Figure 4 illustrates a communication network device 400 hosting an electronic sense function, ESF, network element. The communication network device 400 comprises interface circuitry 402, a processor 404 and memory 406 comprising instructions 410 executable by the processor whereby the communication network device 400 is operative to receive sense data from a sensing device and send the event sense data and a monitoring location of the sensing device to a data senses function, DSF. The event data includes the sense data and a location of the sensing device.

In an embodiment, the at least one ESF is at least one of an electronic nose function, ENF, operative to receive smell data from an electronic nose, an electronic tongue function, ETF, operative to receive taste data from an electronic tongue, and an electronic eye function, EEF, operative to receive visual data from an electronic eye.

As reported in Ordoñez Araque et al "Electronic Nose, Tongue and Eye: Their Usefulness for the Food Industry", Vitae, vol. 27, no. 3, 2020, the electronic nose, tongue, and eye are futuristic technologies that have been used for many years. They can increasingly be found in the food industry, where their function is to determine sensory characteristics (smell, aroma, and flavour) and objective visuals, without the subjectivity that can be represented by sensory analysis by people.

The Electronic Nose (EN) is a tool that consists of three main parts: a sample delivery system; an array of gas or chemical sensors; and a pattern recognition system, This technology is normally used to detect simple or complex volatile organic compounds. In a similar way to a human nose, the electronic nose works through a series of sensors. After detecting an aroma, the set of sensors generates a pattern based on the type of smell. The pattern recognition system is trained to interpret and distinguish between various odors based on the pattern. EN has been used in various applications, as set out in Table 7 and reported in Alphus D Wilson and Manuela Baietto, "Applications and advances in electronic-nose technologies," Sensors (Basel, Switzerland) vol. 9, no. 7 (2009), pages 5099-5148.

**Table 7: Electronic nose, EN, applications**

| **Sector** | **Application area** | **Specific use examples** |
|---|---|---|
| *Environmental* | Air and Water quality monitoring. | Pollution detection, effluents, toxic spills. |
| | Pollution abatement regulations. | Malodor emissions, toxic/hazardous gases. |
| | | Control of point-source pollution releases. |
| *Military* | Personnel and population security. | Biological and chemical weapons. |
| | Civilian and military safety. | Explosive materials detection. |
| *Manufacturing* | Safety, security, work conditions. | Fire alarms. Toxic gas leak detection. |
| *Food and beverage* | Consumer fraud prevention. | Ingredient confirmation, content standards. |
| | Food contamination. | Spoilage, shelf life. |
| *Agriculture* | Crop protection. | Homeland Security. |
| | Pre- and post-harvest diseases. | Pest identification |
| *Airline transportation* | Public Safety and Welfare. | Explosive and flammable materials detection. |
| | Passenger and Personal Security. | |
| *Regulatory* | Environmental protection | Air, water, and soil contamination tests. |
| *Scientific Research* | Ecological Studies | Ecosystem functions. |

The electronic tongue is a multi-channel taste sensor (more than five basic flavors) with global selectivity. It is composed of several types of lipid/polymer membranes to transform information about taste substances into electrical signals uploaded into a computer. Electronic tongue signals are analyzed in a pattern recognition unit to discriminate between similar samples. It is an analytical tool composed of three parts: (1) nonspecific and not very selective chemical sensors that have partial specificity (cross-sensitivity) to different components in a liquid sample; (2) an appropriate method of pattern recognition; (3) multivariate calibration for data processing.

The electronic eye is a computer vision technology that converts optical images into digital images. It uses an image sensor to collect images of objects and uses computer simulation criteria to identify the images to avoid subjective deviation of human vision. The computer vision process generally includes five steps: image acquisition, image processing, feature extraction, pattern recognition, and decision making.

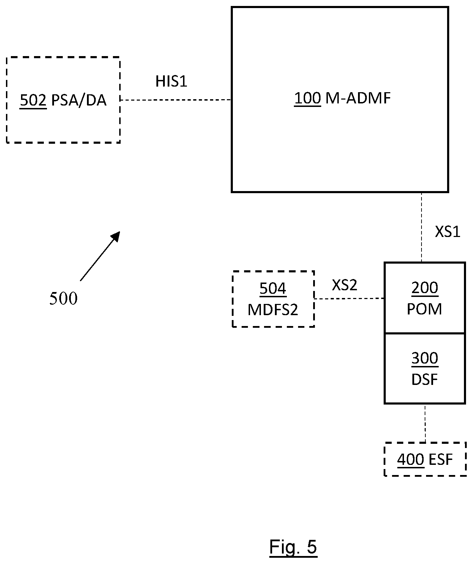

Referring to Figure 5, an embodiment provides a monitoring system 500 comprising a first communication network device 100 hosting a M-ADMF NE as described above with reference to Figure 1, a second communication network device 200 hosting a POM NE as described above with reference to Figure 2, and third communication network device 300 hosting a DSF NE as described above with reference to Figure 3.

The monitoring system 500 is provided within a communication network which provides communication interfaces. The handover interface, HIS1, is provided between a public agency, PA, for example a public safety agency or a defence agency, PSA/DA, 502. The first internal communication interface, XS1, is provided between the M-ADMF NE and the POM NE, and the second internal communication interface, XS2, is provided between the POM NE and a mediation function, in this example a mediation and delivery function for senses 2, MDFS2, 504.

In an embodiment, the monitoring system 500 further comprises at least one ESF 400 as described above with reference to Figure 4.

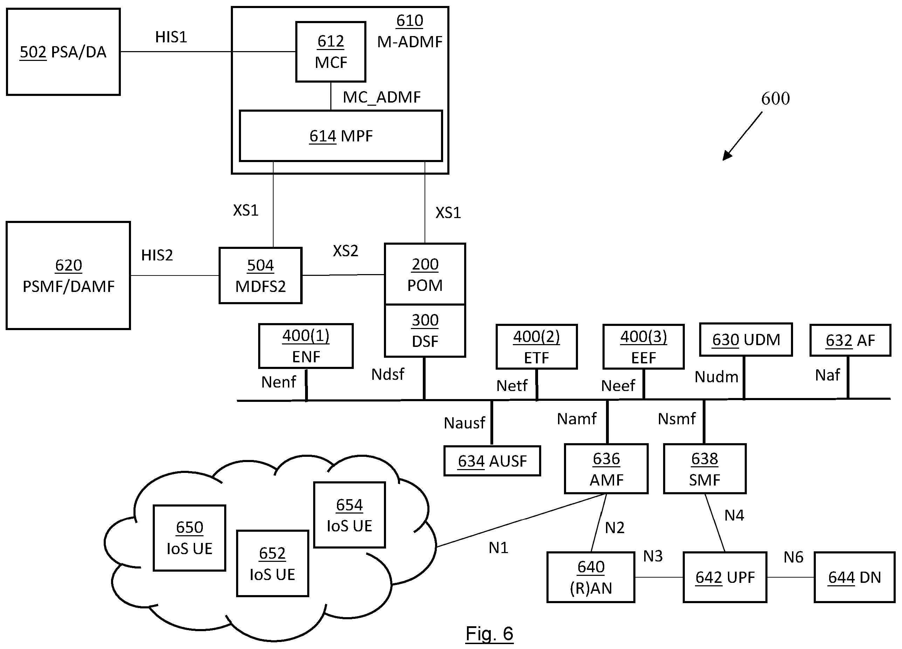

Referring to Figure 6, an embodiment provides a monitoring system 600 comprising a first communication network device 610 hosting a M-ADMF NE as described above with reference to Figure 1, a second communication network device 200 hosting a POM NE as described above with reference to Figure 2, and third communication network device 300 hosting a DSF NE as described above with reference to Figure 3.

The M-ADMF 610 includes a monitoring control function, MCF, 612 and a monitoring provisioning function, MPF, 614. The first communication network device 610 is operative to receive the monitoring activation request message from the PSA/DA 502 at the MCF on the HIS1 interface. The first communication network device is operative to obtain the event reporting information parameters from the monitoring activation request message and provide the event reporting information parameters to the MPF on an internal interface, MC_ADMF. The communication network device is operative to send the activate task message from the MPF to the second communication network device POM 200 on an XS1 interface. The first communication network device is further operative to provision the MDFS2 504 using an XS1 interface.

The monitoring system 600 further comprises three ESF 400, as described above with reference to Figure 4; an electronic nose function, ENF, 400(1), an electronic tongue function, ETF, 400(2) and an electronic eye function, EEF, 400(3).

The monitoring system 600 is provided within a 5G communication network which additionally comprises the following network components: a unified data management, UDM, network element 630, an application function, AF, 632, an authentication server function, AUSF, 634, an access and mobility management function, AMF, 636, a session management function, SMF, 638, a (radio) access network, (R)AN, 640, a user plane function, UPF, 642 and a data network, DN, 644. The 5G communication network provides respective communication interfaces, Nenf, Netf, Neef, Nudm, Naf, Nausf, Namf, Nsmf, N1, N2, N3, N4, N6, for the network components.

The monitoring system 600 further comprises Internet of Senses, loS, user equipment, UEs, 650, 652, 654 comprising sensing devices and a public safety/defence agency monitoring facility, PSMF/DAMF, 620. The IoS UEs are provided at monitoring locations and comprise at least one of an electronic nose, EN, an electronic tongue, ET, or an electronic eye, EE, sensing device. The PSMF/DAMF receives the event information from the MDFS2 on a second handover interface, HIS2, having an LI handover interface 2, HI2, interface format.

The monitoring system 600 provides network connected electronic sense functions, ENF, ETF, EEF, to acquire data from multiple and distributed multi-senses sensors, EN, ET, EE, which is provided to the DSF 300 to determine the occurrence of events which the PSA/DA has subscribed to monitoring of.

The monitoring system 600 may be implemented in a virtualised network function, VNF, environment or native cloud architecture of communication networks including 5G and future 6G.

The new functions introduced in the monitoring system 600 are:
1) Handover Interface for Senses 1 (HIS1) used for requesting subscription, from the Public Safety and Defense Agencies, PAS/DA 502, to notification of specific senses data monitoring events (e.g. Explosive and Flammable detection Events, Pollution Detection Events)
2) XS1 used for requesting/response subscription to notification of specific monitoring events (e.g. Explosive and Flammable detection Events, Pollution Detection Events)
3) XS2 used to report via the Data Senses Function (DSF) 300 monitoring events.
4) When an event is received from Monitoring Related Information-Point of Monitoring (MRI-POM), then the MDFS2 504 shall support reporting to the PSMF/DAMF 620 requested data by Handover Interface for Senses 2 (HIS2).

The ENF 400(1), ETF 400(2) and EEF 400(3) send senses data to the DSF 300 on the respective Nenf, Netf, Neef, communication interfaces, using the following messages:
Nenf_EventExposure_Subscribe Request
Nenf_EventExposure_Subscribe Response
Netf_EventExposure_Subscribe Request
Netf_EventExposure_Subscribe Response
Neef_EventExposure_Subscribe Request
Neef_EventExposure_Subscribe Response

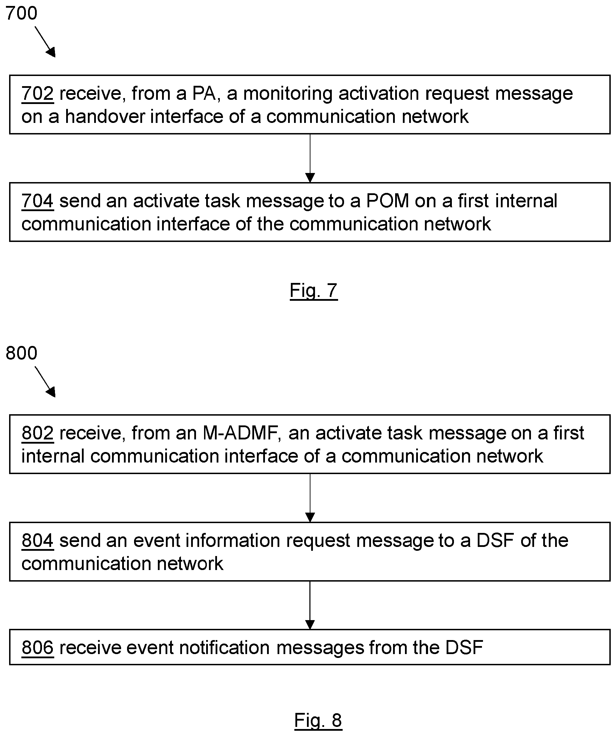

An embodiment provides a method 700 of operating a monitoring administration function, M-ADMF, the method comprising the following steps, as illustrated in Figure 7.

The method 700 comprises receiving 702 a monitoring activation request message from a public agency, PA, on a handover interface of a communication network. The monitoring activation request message includes event reporting information parameters including:
- information identifying a monitoring target; and
- at least one event type, occurrence associated with the monitoring target the PA is requesting to receive notification of.

The method further comprises sending 704 an activate task message to a point of monitoring, POM, on a first internal communication interface of the communication network. The activate task message includes the event reporting information parameters received in the monitoring activation request message.

An embodiment provides a method 800 of operating a point of monitoring, POM, the method comprising the following steps, as illustrated in Figure 8.

The method 800 comprises receiving 802 an activate task message from a monitoring administration function, M-ADMF, on a first internal communication interface of a communication network. The activate task message includes event reporting information parameters including:
information identifying a monitoring target; and
at least one event type, occurrence associated with the monitoring target a public agency, PA, has requested to receive notification of.

The method 800 further comprises sending 804 an event information request message to a data senses function, DSF, of the communication network. The event information request message includes the event reporting information parameters received in the activate task message.

The method 800 further comprises receiving 806 event notification messages from the DSF. The event notification messages include event information including:
- information identifying a monitoring target at which at least one event has been detected; and
- at least one event type detected at the monitoring target.

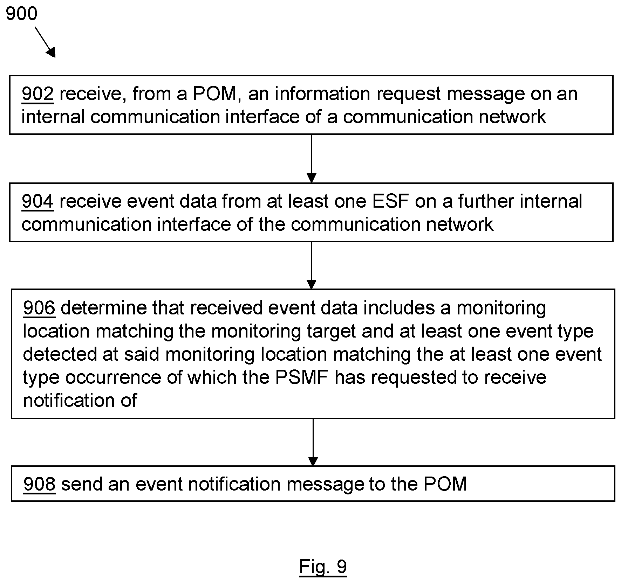

An embodiment provides a method 900 of operating a data senses function, DSF, the method comprising the following steps, as illustrated in Figure 9.

The method 900 comprises receiving 902, an information request message from a point of monitoring, POM, on an internal communication interface of a communication network. The information request message includes event reporting information parameters including:
- information identifying a monitoring target; and
- at least one event type, occurrence associated with the monitoring target a public agency, PA, has requested to receive notification of.

The method 900 further comprises receiving 904 event data from at least one electronic sense function, ESF, on a further internal communication interface of the communication network. Event data includes monitoring locations and senses data detected at monitoring locations.

The method 900 further comprises determining 906 that received event data includes a monitoring location matching the monitoring target. The method 900 further comprises determining that senses data detected at the matched monitoring location matches the at least one event type occurrence of which the PA has requested to receive notification of.

The method 900 further comprises, in response to determining the matched monitoring location and at least one event type, sending 908 an event notification message to the POM. The event notification message includes event information including:
- information identifying the monitoring location matching the monitoring target; and
- the at least one event type detected at the matched monitoring location that matches the at least one event type occurrence of which the PA has requested to receive notification of.

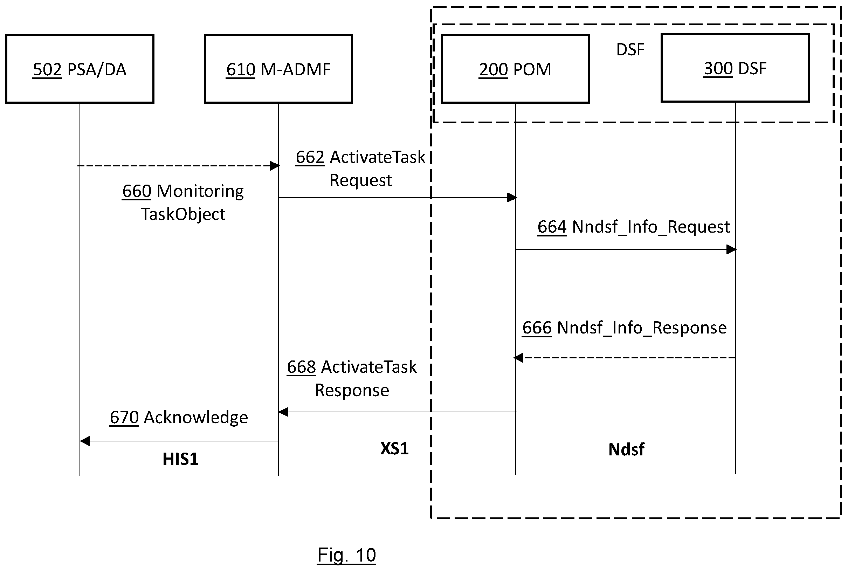

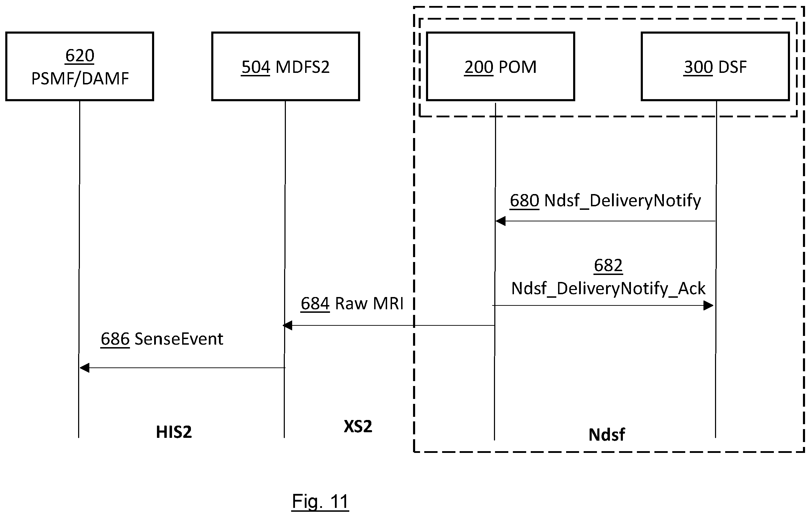

The signalling diagrams of Figures 10 and 11 illustrate how the above methods 700, 800, 900 may be applied to the M-ADMF, POM and DSF of a monitoring system, such as the monitoring system 600 described above with reference to Figure 6.

Figures 10 and 11 illustrate the procedure used by the M-ADMF to request event information from the POM, that in turn requests the DSF for event, using Nndsf_Info_Request. When a request for event information is received, the DSF determines whether triggering new senses data collection is needed. The DSF responds with relevant event information to the POM.

The method steps for a PSA/DA subscribing to monitoring of specific event types at a monitoring target are illustrated in Figure 10. A PSA/DA user creates a Monitoring TaskObject specifying the monitoring location and type of event to be monitored, as described above, and associates it to a Public Safety Monitoring Facility (PSMF)/Defense Agency Monitoring Facility (DAMF), reached with a specific HIS2 interface. The Monitoring TaskObject 660 is sent by the PSA/DA to the M-ADMF 610 on the HIS1 interface.

The MCF, present in the M-ADMF, receives the Monitoring TaskObject 660, derives the event reporting information parameters from the Monitoring TaskObject and provides it to the MPF. The MPF sends an ActivateTaskRequest 662, as described above, to the POM 200 on the XS1 interface. The POM derives the event reporting information parameters from the ActivateTaskRequest and send them in an Nndsf_Info_Request 664 to the DSF 300 on an Ndsf interface. The DSF sends a Nndsf_Info_Reponse 666 back to the POM on Ndsf, to acknowledge the Nndsf_Info_Request. The POM sends an ActivateTaskResponse 668 back to the M-ADMF on XS1 to acknowledge that the ActivateTaskRequest has been actioned. The M-ADMF send an Acknowledge message 670 to the PSA/DA. This completes the subscription of the PSA/DA to monitoring of the monitoring location for occurrence of the specified event type.

As illustrated in Figure 11, when the DSF 300 determines that an event has occurred of the type and at the specified monitoring location to which the PSA/DA has subscribed, the DSF sends an event notification message, Ndsf_DeliveryNotify 680, to the POM 200 on the Ndsf interface. The Ndsf_DeliveryNotify includes event information relating to the matching event that has occurred. The POM sends an Ndsf_DeliveryNotify_Ack message 682 back to the DSF to acknowledge receipt. The POM sends a Raw MRI message 684 to the MDFS2 on the XS2 interface as a binary stream of XS2 PDUs, as described above; the Raw MRI message includes the event information. The MDFS2 sends a SenseEvent message 686 to the PSMF/DAMF 620 on the HIS2 interface; the SenseEvent message includes the event information. The scope of protection sought for is defined by the appended claims.

## Claims

1. A communication network device (100) hosting a monitoring administration function, M-ADMF, network element, NE, the communication network device comprising interface circuitry (102), at least one processor (104) and memory (106) comprising instructions (110) executable by the at least one processor whereby the communication network device is operative to:
- receive, from a public agency, PA, a monitoring activation request message on a handover interface of a communication network, the monitoring activation request message including event reporting information parameters including:
- information identifying a monitoring target; and
- at least one event type, occurrence associated with the monitoring target the PA is requesting to receive notification of, wherein the at least one event type is at least one of pollution detection, explosive material detection, flammable material detection, natural gas emission detection, toxic leak detection, toxic spill, spoilage or contamination detection, or drug detection; and
- send an activate task message to a point of monitoring, POM, on a first internal communication interface of the communication network, the activate task message including the event reporting information parameters received in the monitoring activation request message.

2. The communication network device (100) of claim 1, wherein the M-ADMF includes a monitoring control function, MCF, and a monitoring provisioning function, MPF, and wherein the communication network device is operative to:
- receive, at the MCF, the monitoring activation request message on the handover interface;
- obtain the event reporting information parameters from the monitoring activation request message;
- provide the event reporting information parameters to the MPF; and
- send, from the MPF, the activate task message to the POM on the first internal communication interface.

3. The communication network device (100) of any one of the preceding claims, wherein the communication network device is further operative to form the activate task message by mapping the information identifying a monitoring target and the at least one event type from the monitoring activation request message into the activate task message.

4. A communication network device (200) hosting a point of monitoring, POM, network element, NE, the communication network device comprising interface circuitry (202), at least one processor (204) and memory (206) comprising instructions (210) executable by the at least one processor whereby the communication network device is operative to:
- receive, from a monitoring administration function, M-ADMF, an activate task message on a first internal communication interface of a communication network, the activate task message including event reporting information parameters including:
- information identifying a monitoring target; and
- at least one event type, occurrence associated with the monitoring target a public agency, PA, has requested to receive notification of, wherein the at least one event type is at least one of pollution detection, explosive material detection, flammable material detection, natural gas emission detection, toxic leak detection, toxic spill, spoilage or contamination detection, or drug detection;
- send an event information request message to a data senses function, DSF, of the communication network, the event information request message including the event reporting information parameters received in the activate task message; and
- receive event notification messages from the DSF, the event notification messages including event information including:
- information identifying a monitoring target at which at least one event has been detected; and
- at least one event type detected at the monitoring target.

5. The communication network device (200) of claim 4, wherein the communication network device is further operative to send a monitoring related information, MRI, message to a mediation function on a second internal communication interface of the communication network, the MRI message including the event information.

6. The communication network device (200) of claim 5, wherein the second internal communication interface has an X2 lawful interception internal network interface format.

7. A communication network device (300) hosting a data senses function, DSF, network element, NE, the communication network device comprising interface circuitry (302), at least one processor (304) and memory (306) comprising instructions (310) executable by the at least one processor whereby the communication network device is operative to:
- receive, from a point of monitoring, POM, an information request message on an internal communication interface of a communication network, the information request message including event reporting information parameters including:
- information identifying a monitoring target; and
- at least one event type, occurrence associated with the monitoring target a public agency, PA, has requested to receive notification of, wherein the at least one event type is at least one of pollution detection, explosive material detection, flammable material detection, natural gas emission detection, toxic leak detection, toxic spill, spoilage or contamination detection, or drug detection;
- receive event data from at least one electronic sense function, ESF, on a further internal communication interface of the communication network, event data including monitoring locations and senses data detected at monitoring locations;
- determine that received event data includes a monitoring location matching the monitoring target and senses data detected at said monitoring location matching the at least one event type occurrence of which the PA has requested to receive notification of; and
- in response to said determining, send an event notification message to the POM, the event notification message including event information including:
- information identifying the monitoring location matching the monitoring target; and
- the at least one event type detected at said monitoring location matching the at least one event type occurrence of which the PA has requested to receive notification of.

8. The communication network device (300) of claim 7, wherein the communication network device is further operative to:
- determine that triggering of new senses data collection by the at least one ESF is required; and
- in response to said determining, send a senses data trigger message to the at least one ESF.

9. The communication network device (300) of any one of claims 7 and 8, wherein the at least one ESF is at least one of an electronic nose function, ENF, operative to receive smell data from an electronic nose, an electronic tongue function, ETF, operative to receive taste data from an electronic tongue, and an electronic eye function, EEF, operative to receive visual data from an electronic eye.

10. A monitoring system (500, 600) comprising a first communication network device (100, 610) hosting a monitoring administration function, M-ADMF, network element, NE, according to any one of claims 1 to 5, a second communication network device (200) hosting a point of monitoring, POM, network element, NE, according to any one of claims 6 to 9, and third communication network device (300) hosting a data senses function, DSF, network element, NE, according to any one of claims 7 to 9.

11. The monitoring system (500, 600) of claim 10, further comprising at least one fourth communication network device (400, 400(1), 400(2), 400(3)) hosting an electronic sense function, ESF, network element, the fourth communication network device comprising interface circuitry (402), at least one processor (404) and memory (406) comprising instructions (410) executable by the at least one processor whereby the fourth communication network device is operative to:
- receive sense data from a sensing device; and
- send the sense data and a monitoring location of the sensing device to the DSF NE.

12. The monitoring system (500, 600) of claim 11, wherein the ESF is one of an electronic nose function, ENF, operative to receive smell data from an electronic nose sensing device, an electronic tongue function, ETF, operative to receive taste data from an electronic tongue sensing device, and an electronic eye function, EEF, operative to receive visual data from an electronic eye sensing device.

13. A method (700) of operating a monitoring administration function, M-ADMF, the method comprising steps of:
- receiving (702), from a public safety agency, PA, a monitoring activation request message (660) on a handover interface of a communication network, the monitoring activation request message including event reporting information parameters including:
- information identifying a monitoring target; and
- at least one event type, occurrence associated with the monitoring target the PA is requesting to receive notification of, wherein the at least one event type is at least one of pollution detection, explosive material detection, flammable material detection, natural gas emission detection, toxic leak detection, toxic spill, spoilage or contamination detection, or drug detection; and
- sending (704) an activate task message (662) to a point of monitoring, POM, on a first internal communication interface of the communication network, the activate task message including the event reporting information parameters received in the monitoring activation request message.

14. A method (800) of operating a point of monitoring, POM, the method comprising steps of:
- receiving (802), from a monitoring administration function, M-ADMF, an activate task message (662) on a first internal communication interface of a communication network, the activate task message including event reporting information parameters including:
- information identifying a monitoring target; and
- at least one event type, occurrence associated with the monitoring target a public safety agency, PA, has requested to receive notification of, wherein the at least one event type is at least one of pollution detection, explosive material detection, flammable material detection, natural gas emission detection, toxic leak detection, toxic spill, spoilage or contamination detection, or drug detection;
- sending (804) an event information request message (664) to a data senses function, DSF, of the communication network, the event information request message including the event reporting information parameters received in the activate task message; and
- receiving (806) event notification messages (680) from the DSF, the event notification messages including event information including:
- information identifying a monitoring target at which at least one event has been detected; and
- at least one event type detected at the monitoring target.

15. A method (900) of operating a data senses function, DSF, the method comprising steps of:
- receiving (902), from a point of monitoring, POM, an information request message (664) on an internal communication interface of a communication network, the information request message including event reporting information parameters including:
- information identifying a monitoring target; and
- at least one event type, occurrence associated with the monitoring target a public safety agency, PA, has requested to receive notification of, wherein the at least one event type is at least one of pollution detection, explosive material detection, flammable material detection, natural gas emission detection, toxic leak detection, toxic spill, spoilage or contamination detection, or drug detection;
- receiving (904) event data from at least one electronic sense function, ESF, on a further internal communication interface of the communication network, event data including monitoring locations and senses data detected at monitoring locations;
- determining (906) that received event data includes a monitoring location matching the monitoring target and senses data detected at said monitoring location matching the at least one event type occurrence of which the PA has requested to receive notification of; and
- in response to said determining, sending (908) an event notification message (680) to the POM, the event notification message including event information including:
- information identifying the monitoring location matching the monitoring target; and
- the at least one event type detected at said monitoring location matching the at least one event type occurrence of which the PA has requested to receive notification of.

## Patentansprüche

1. Kommunikationsnetzwerkvorrichtung (100), die ein Netzwerkelement, NE, einer Überwachungsverwaltungsfunktion, M-ADMF, hostet, wobei die Kommunikationsnetzwerkvorrichtung Schnittstellenschaltungsanordnung (102), mindestens einen Prozessor (104) und Speicher (106) umfasst, der Anweisungen (110) umfasst, die von dem mindestens einen Prozessor ausgeführt werden können, wodurch die Kommunikationsnetzwerkvorrichtung zu Folgendem ausgelegt ist:
- Empfangen einer Überwachungsaktivierungsanforderungsnachricht auf einer Handover-Schnittstelle eines Kommunikationsnetzwerks von einer öffentlichen Behörde, PA, wobei die Überwachungsaktivierungsanforderungsnachricht Ereignismeldungsinformationsparameter umfasst, die Folgendes umfassen:
- Informationen, die ein Überwachungsziel identifizieren; und
- mindestens einen Ereignistyp, über dessen Auftreten, das mit dem Überwachungsziel assoziiert ist, die PA den Empfang einer Benachrichtigung anfordert, wobei es sich bei dem mindestens einen Ereignistyp um mindestens eines von Erkennung von Verschmutzung, Erkennung von explosivem Material, Erkennung von entzündlichem Material, Erkennung von Erdgasemissionen, Erkennung von Giftlecks, Erkennung von Giftaustritt, Verderb oder Kontamination oder Erkennung von Drogen handelt; und
- Senden einer Aufgabenaktivierungsnachricht auf einer ersten internen Kommunikationsschnittstelle des Kommunikationsnetzwerks an einen Überwachungspunkt, POM, wobei die Aufgabenaktivierungsnachricht die in der Überwachungsaktivierungsanforderungsnachricht empfangenen Ereignismeldungsinformationsparameter umfasst.

2. Kommunikationsnetzwerkvorrichtung (100) nach Anspruch 1, wobei die M-ADMF eine Überwachungssteuerungsfunktion, MCF, und eine Überwachungsbereitstellungsfunktion, MPF, umfasst und wobei die Kommunikationsnetzwerkvorrichtung zu Folgendem ausgelegt ist:
- Empfangen der Überwachungsaktivierungsanforderungsnachricht an der MCF auf der Handover-Schnittstelle;
- Erhalten der Ereignismeldungsinformationsparameter aus der Überwachungsaktivierungsanforderungsnachricht;
- Bereitstellen der Ereignismeldungsinformationsparameter für die MPF; und
- Senden der Aufgabenaktivierungsnachricht von der MPF auf der ersten internen Kommunikationsschnittstelle an den POM.

3. Kommunikationsnetzwerkvorrichtung (100) nach einem der vorhergehenden Ansprüche, wobei die Kommunikationsnetzwerkvorrichtung ferner dazu ausgelegt ist, die Aufgabenaktivierungsnachricht durch Abbilden der Informationen, die ein Überwachungsziel identifizieren, und des mindestens einen Ereignistyps aus der Überwachungsaktivierungsanforderungsnachricht in die Aufgabenaktivierungsnachricht zu erstellen.

4. Kommunikationsnetzwerkvorrichtung (200), die ein Netzwerkelement, NE, eines Überwachungspunkts, POM, hostet, wobei die Kommunikationsnetzwerkvorrichtung Schnittstellenschaltungsanordnung (202), mindestens einen Prozessor (204) und Speicher (206) umfasst, der Anweisungen (210) umfasst, die von dem mindestens einen Prozessor ausgeführt werden können, wodurch die Kommunikationsnetzwerkvorrichtung zu Folgendem ausgelegt ist:
- Empfangen einer Aufgabenaktivierungsnachricht auf einer ersten internen Kommunikationsschnittstelle eines Kommunikationsnetzwerks von einer Überwachungsverwaltungsfunktion, M-ADMF, wobei die Aufgabenaktivierungsnachricht Ereignismeldungsinformationsparameter umfasst, die Folgendes umfassen:
- Informationen, die ein Überwachungsziel identifizieren; und
- mindestens einen Ereignistyp, über dessen Auftreten, das mit dem Überwachungsziel assoziiert ist, eine öffentliche Behörde, PA, den Empfang einer Benachrichtigung angefordert hat, wobei es sich bei dem mindestens einen Ereignistyp um mindestens eines von Erkennung von Verschmutzung, Erkennung von explosivem Material, Erkennung von entzündlichem Material, Erkennung von Erdgasemissionen, Erkennung von Giftlecks, Erkennung von Giftaustritt, Verderb oder Kontamination oder Erkennung von Drogen handelt; und
- Senden einer Ereignisinformationsanforderungsnachricht an eine Sinnesdatenfunktion, DSF, des Kommunikationsnetzwerks, wobei die Ereignisinformationsanforderungsnachricht die in der Aufgabenaktivierungsnachricht empfangenen Ereignismeldungsinformationsparameter umfasst; und
- Empfangen von Ereignisbenachrichtigungsnachrichten von der DSF, wobei die Ereignisbenachrichtigungsnachrichten Ereignisinformationen umfassen, die Folgendes umfassen:
- Informationen, die ein Überwachungsziel identifizieren, an dem mindestens ein Ereignis erkannt wurde; und
- mindestens einen Ereignistyp, der an dem Überwachungsziel erkannt wird.

5. Kommunikationsnetzwerkvorrichtung (200) nach Anspruch 4, wobei die Kommunikationsnetzwerkvorrichtung ferner dazu ausgelegt ist, eine Nachricht mit überwachungsbezogenen Informationen, MRI, auf einer zweiten internen Kommunikationsschnittstelle des Kommunikationsnetzwerks an eine Vermittlungsfunktion zu senden, wobei die MRI-Nachricht die Ereignisinformationen umfasst.

6. Kommunikationsnetzwerkvorrichtung (200) nach Anspruch 5, wobei zweite interne Kommunikationsschnittstelle ein Format einer internen X2-Netzwerkschnittstelle für legales Abhören aufweist.

7. Kommunikationsnetzwerkvorrichtung (300), die ein Netzwerkelement, NE, einer Sinnesdatenfunktion, DSF, hostet, wobei die Kommunikationsnetzwerkvorrichtung Schnittstellenschaltungsanordnung (302), mindestens einen Prozessor (304) und Speicher (306) umfasst, der Anweisungen (310) umfasst, die von dem mindestens einen Prozessor ausgeführt werden können, wodurch die Kommunikationsnetzwerkvorrichtung zu Folgendem ausgelegt ist:
- Empfangen einer Informationsanforderungsnachricht auf einer internen Kommunikationsschnittstelle eines Kommunikationsnetzwerks von einem Überwachungspunkt, POM, wobei die Informationsanforderungsnachricht Ereignismeldungsinformationsparameter umfasst, die Folgendes umfassen:
- Informationen, die ein Überwachungsziel identifizieren; und
- mindestens einen Ereignistyp, über dessen Auftreten, das mit dem Überwachungsziel assoziiert ist, eine öffentliche Behörde, PA, den Empfang einer Benachrichtigung angefordert hat, wobei es sich bei dem mindestens einen Ereignistyp um mindestens eines von Erkennung von Verschmutzung, Erkennung von explosivem Material, Erkennung von entzündlichem Material, Erkennung von Erdgasemissionen, Erkennung von Giftlecks, Erkennung von Giftaustritt, Verderb oder Kontamination oder Erkennung von Drogen handelt; und
- Empfangen von Ereignisdaten von mindestens einer elektronischen Sinnesfunktion, ESF, auf einer weiteren internen Kommunikationsschnittstelle des Kommunikationsnetzwerks, wobei die Ereignisdaten Überwachungsstandorte und an den Überwachungsstandorten erfasste Sinnesdaten umfassen;
- Bestimmen, dass die empfangenen Ereignisdaten einen Überwachungsstandort, der mit dem Überwachungsziel übereinstimmt, und an dem Überwachungsstandort erfasste Sinnesdaten umfassen, die mit dem mindestens einen Ereignistyp übereinstimmen, über dessen Auftreten die PA den Empfang einer Benachrichtigung angefordert hat; und
- in Reaktion auf das Bestimmen Senden einer Ereignisbenachrichtigungsnachricht an den POM, wobei die Ereignisbenachrichtigungsnachricht Ereignisinformationen umfasst, die Folgendes umfassen:
- Informationen, die den Überwachungsstandort identifizieren, der mit dem Überwachungsziel übereinstimmt; und
- den mindestens einen Ereignistyp, der an dem Überwachungsstandort erkannt wird, der mit dem mindestens einen Ereignistyp übereinstimmt, über dessen Auftreten die PA den Empfang einer Benachrichtigung angefordert hat.

8. Kommunikationsnetzwerkvorrichtung (300) nach Anspruch 7, wobei die Kommunikationsnetzwerkvorrichtung ferner zu Folgendem ausgelegt ist:
- Bestimmen, dass das Auslösen einer neuen Sinnesdatenerfassung durch die mindestens eine ESF erforderlich ist; und
- in Reaktion auf das Bestimmen Senden einer Sinnesdatenauslösenachricht an die mindestens eine ESF.

9. Kommunikationsnetzwerkvorrichtung (300) nach einem der Ansprüche 7 und 8, wobei es sich bei der mindestens einen ESF um eine von einer elektronischen Nasenfunktion, ENF, die dazu ausgelegt ist, Geruchsdaten von einer elektronischen Nase zu empfangen, einer elektronischen Zungenfunktion, ETF, die dazu ausgelegt ist, Geschmacksdaten von einer elektronischen Zunge zu empfangen, und einer elektronischen Augenfunktion, EEF, handelt, die dazu ausgelegt ist, optische Daten von einem elektronischen Auge zu empfangen.

10. Überwachungssystem (500, 600), umfassend eine erste Kommunikationsnetzwerkvorrichtung (100, 610) nach einem der Ansprüche 1 bis 5, die ein Netzwerkelement, NE, einer Überwachungsverwaltungsfunktion, M-ADMF, hostet, eine zweite Kommunikationsnetzwerkvorrichtung (200) nach einem der Ansprüche 6 bis 9, die ein Netzwerkelement, NE eines Überwachungspunkts, POM, hostet, und eine Kommunikationsnetzwerkvorrichtung (300) nach einem der Ansprüche 7 bis 9, die ein Netzwerkelement, NE, einer Sinnesdatenfunktion, DSF, hostet.

11. Überwachungssystem (500, 600) nach Anspruch 10, ferner umfassend mindestens eine vierte Kommunikationsnetzwerkvorrichtung (400, 400(1), 400(2), 400(3)), die ein Netzwerkelement, NE, einer elektronischen Sinnesfunktion, ESF, hostet, wobei die vierte Kommunikationsnetzwerkvorrichtung Schnittstellenschaltungsanordnung (402), mindestens einen Prozessor (404) und Speicher (406) umfasst, der Anweisungen (410) umfasst, die von dem mindestens einen Prozessor ausgeführt werden können, wodurch die Kommunikationsnetzwerkvorrichtung zu Folgendem ausgelegt ist:
- Empfangen von Sinnesdaten von einer Sensorvorrichtung; und
- Senden der Sinnesdaten und eines Überwachungsstandorts der Sensorvorrichtung an das DSF-NE.

12. Überwachungssystem (500, 600) nach Anspruch 11, wobei es sich bei der ESF um eine von einer elektronischen Nasenfunktion, ENF, die dazu ausgelegt ist, Geruchsdaten von einer elektronischen Nasensensorvorrichtung zu empfangen, einer elektronischen Zungenfunktion, ETF, die dazu ausgelegt ist, Geschmacksdaten von einer elektronischen Zungensensorvorrichtung zu empfangen, und einer elektronischen Augenfunktion, EEF, handelt, die dazu ausgelegt ist, optische Daten von einer elektronischen Augensensorvorrichtung zu empfangen.

13. Verfahren (700) zum Betreiben einer Überwachungsverwaltungsfunktion, M-ADMF, wobei das Verfahren die folgenden Schritte umfasst:
- Empfangen (702) einer Überwachungsaktivierungsanforderungsnachricht (660) auf einer Handover-Schnittstelle eines Kommunikationsnetzwerks von einer Behörde für öffentliche Sicherheit, PA, wobei die Überwachungsaktivierungsanforderungsnachricht Ereignismeldungsinformationsparameter umfasst, die Folgendes umfassen:
- Informationen, die ein Überwachungsziel identifizieren; und
- mindestens einen Ereignistyp, über dessen Auftreten, das mit dem Überwachungsziel assoziiert ist, die PA eine Benachrichtigung anfordert, wobei es sich bei dem mindestens einen Ereignistyp um mindestens eines von Erkennung von Verschmutzung, Erkennung von explosivem Material, Erkennung von entzündlichem Material, Erkennung von Erdgasemissionen, Erkennung von Giftlecks, Erkennung von Giftaustritt, Verderb oder Kontamination oder Erkennung von Drogen handelt; und
- Senden (704) einer Aufgabenaktivierungsnachricht (662) auf einer ersten internen Kommunikationsschnittstelle des Kommunikationsnetzwerks an einen Überwachungspunkt, POM, wobei die Aufgabenaktivierungsnachricht die in der Überwachungsaktivierungsanforderungsnachricht empfangenen Ereignismeldungsinformationsparameter umfasst.

14. Verfahren (800) zum Betreiben eines Überwachungspunkts, POM, wobei das Verfahren die folgenden Schritte umfasst:
- Empfangen (802) einer Aufgabenaktivierungsnachricht (662) auf einer ersten internen Kommunikationsschnittstelle eines Kommunikationsnetzwerks von einer Überwachungsverwaltungsfunktion, M-ADMF, wobei die Aufgabenaktivierungsnachricht Ereignismeldungsinformationsparameter umfasst, die Folgendes umfassen:
- Informationen, die ein Überwachungsziel identifizieren; und
- mindestens einen Ereignistyp, über dessen Auftreten, das mit dem Überwachungsziel assoziiert ist, eine Behörde für öffentliche Sicherheit, PA, den Empfang einer Benachrichtigung angefordert hat, wobei es sich bei dem mindestens einen Ereignistyp um mindestens eines von Erkennung von Verschmutzung, Erkennung von explosivem Material, Erkennung von entzündlichem Material, Erkennung von Erdgasemissionen, Erkennung von Giftlecks, Erkennung von Giftaustritt, Verderb oder Kontamination oder Erkennung von Drogen handelt; und
- Senden (804) einer Ereignisinformationsanforderungsnachricht (664) an eine Sinnesdatenfunktion, DSF, des Kommunikationsnetzwerks, wobei die Ereignisinformationsanforderungsnachricht die in der Aufgabenaktivierungsnachricht empfangenen Ereignismeldungsinformationsparameter umfasst; und
- Empfangen (806) von Ereignisbenachrichtigungsnachrichten (680) von der DSF, wobei die Ereignisbenachrichtigungsnachrichten Ereignisinformationen umfassen, die Folgendes umfassen:
- Informationen, die ein Überwachungsziel identifizieren, an dem mindestens ein Ereignis erkannt wurde; und
- mindestens einen Ereignistyp, der an dem Überwachungsziel erkannt wird.

15. Verfahren (900) zum Betreiben einer Sinnesdatenfunktion, DSF, wobei das Verfahren die folgenden Schritte umfasst:
- Empfangen (902) einer Informationsanforderungsnachricht (664) auf einer internen Kommunikationsschnittstelle eines Kommunikationsnetzwerks von einem Überwachungspunkt, POM, wobei die Informationsanforderungsnachricht Ereignismeldungsinformationsparameter umfasst, die Folgendes umfassen:
- Informationen, die ein Überwachungsziel identifizieren; und
- mindestens einen Ereignistyp, über dessen Auftreten, das mit dem Überwachungsziel assoziiert ist, eine Behörde für öffentliche Sicherheit, PA, den Empfang einer Benachrichtigung angefordert hat, wobei es sich bei dem mindestens einen Ereignistyp um mindestens eines von Erkennung von Verschmutzung, Erkennung von explosivem Material, Erkennung von entzündlichem Material, Erkennung von Erdgasemissionen, Erkennung von Giftlecks, Erkennung von Giftaustritt, Verderb oder Kontamination oder Erkennung von Drogen handelt; und
- Empfangen (904) von Ereignisdaten von mindestens einer elektronischen Sinnesfunktion, ESF, auf einer weiteren internen Kommunikationsschnittstelle des Kommunikationsnetzwerks, wobei die Ereignisdaten Überwachungsstandorte und an den Überwachungsstandorten erfasste Sinnesdaten umfassen;
- Bestimmen (906), dass die empfangenen Ereignisdaten einen Überwachungsstandort, der mit dem Überwachungsziel übereinstimmt, und an dem Überwachungsstandort erfasste Sinnesdaten umfassen, die mit dem mindestens einen Ereignistyp übereinstimmen, über dessen Auftreten die PA den Empfang einer Benachrichtigung angefordert hat; und
- in Reaktion auf das Bestimmen Senden (908) einer Ereignisbenachrichtigungsnachricht (680) an den POM, wobei die Ereignisbenachrichtigungsnachricht Ereignisinformationen umfasst, die Folgendes umfassen:
- Informationen, die den Überwachungsstandort identifizieren, der mit dem Überwachungsziel übereinstimmt; und
- den mindestens einen Ereignistyp, der an dem Überwachungsstandort erkannt wird, der mit dem mindestens einen Ereignistyp übereinstimmt, über dessen Auftreten die PA den Empfang einer Benachrichtigung angefordert hat.

## Revendications

1. Dispositif de réseau de communication (100) hébergeant un élément de réseau, NE, de fonction d'administration de surveillance, M-ADMF, le dispositif de réseau de communication comprenant une circuiterie d'interface (102), au moins un processeur (104) et une mémoire (106) comprenant des instructions (110) exécutables par l'au moins un processeur, selon lesquelles le dispositif de réseau de communication est fonctionnel pour :
- recevoir, depuis une agence publique, PA, un message de demande d'activation de surveillance sur une interface de transfert intercellulaire d'un réseau de communication, le message de demande d'activation de surveillance incluant des paramètres d'informations de rapport d'événement incluant :
- des informations identifiant une cible de surveillance ; et
- au moins un type d'événement pour lequel la PA demande de recevoir une notification de survenance associée à la cible de surveillance, dans lequel l'au moins un type d'événement est au moins l'une parmi une détection de pollution, une détection de matériau explosif, une détection de matériau inflammable, une détection d'émission de gaz naturel, une détection de fuite toxique, une détection de déversement, de dégradation ou de contamination toxique, et une détection de drogue ; et
- envoyer un message d'activation de tâche à un point de surveillance, POM, sur une première interface de communication interne du réseau de communication, le message d'activation de tâche incluant les paramètres d'informations de rapport d'événement reçus dans le message de demande d'activation de surveillance.

2. Dispositif de réseau de communication (100) selon la revendication 1, dans lequel la M-ADMF inclut une fonction de commande de surveillance, MCF, et une fonction de fourniture de surveillance, MPF, et dans lequel le dispositif de réseau de communication est fonctionnel pour :
- recevoir, au niveau de la MCF, le message de demande d'activation de surveillance sur l'interface de transfert intercellulaire ;
- obtenir les paramètres d'informations de rapport d'événement à partir du message de demande d'activation de surveillance ;
- fournir les paramètres d'informations de rapport d'événement à la MPF ; et
- envoyer, depuis la MPF, le message d'activation de tâche au POM sur la première interface de communication interne.

3. Dispositif de réseau de communication (100) selon l'une quelconque des revendications précédentes, dans lequel le dispositif de réseau de communication est en outre fonctionnel pour former le message d'activation de tâche par le mappage des informations identifiant une cible de surveillance et l'au moins un type d'événement à partir du message de demande d'activation de surveillance dans le message d'activation de tâche.

4. Dispositif de réseau de communication (200) hébergeant un élément de réseau, NE, de point de surveillance, POM, le dispositif de réseau de communication comprenant une circuiterie d'interface (202), au moins un processeur (204) et une mémoire (206) comprenant des instructions (210) exécutables par l'au moins un processeur, selon lesquelles le dispositif de réseau de communication est fonctionnel pour :
- recevoir, depuis une fonction d'administration de surveillance, M-ADMF, un message d'activation de tâche sur une première interface de communication interne d'un réseau de communication, le message d'activation de tâche incluant des paramètres d'informations de rapport d'événement incluant :
- des informations identifiant une cible de surveillance ; et
- au moins un type d'événement pour lequel une agence publique, PA, a demandé de recevoir une notification de survenance associée à la cible de surveillance, dans lequel l'au moins un type d'événement est au moins l'une parmi une détection de pollution, une détection de matériau explosif, une détection de matériau inflammable, une détection d'émission de gaz naturel, une détection de fuite toxique, une détection de déversement, de dégradation ou de contamination toxique, et une détection de drogue ;
- envoyer un message de demande d'informations d'événement à une fonction de détection de données, DSF, du réseau de communication, le message de demande d'informations d'événement incluant les paramètres d'informations de rapport d'événement reçus dans le message d'activation de tâche ; et
- recevoir des messages de notification d'événement depuis la DSF, les messages de notification d'événement incluant des informations d'événement incluant :
- des informations identifiant une cible de surveillance au niveau de laquelle au moins un événement a été détecté ; et
- au moins un type d'événement détecté au niveau de la cible de surveillance.

5. Dispositif de réseau de communication (200) selon la revendication 4, dans lequel le dispositif de réseau de communication est en outre fonctionnel pour envoyer un message d'informations liées à la surveillance, MRI, à une fonction de médiation sur une deuxième interface de communication interne du réseau de communication, le message MRI incluant les informations d'événement.

6. Dispositif de réseau de communication (200) selon la revendication 5, dans lequel la deuxième interface de communication interne présente un format d'interface de réseau interne d'interception légale X2.

7. Dispositif de réseau de communication (300) hébergeant un élément de réseau, NE, de fonction de détection de données, DSF, le dispositif de réseau de communication comprenant une circuiterie d'interface (302), au moins un processeur (304) et une mémoire (306) comprenant des instructions (310) exécutables par l'au moins un processeur, selon lesquelles le dispositif de réseau de communication est fonctionnel pour :
- recevoir, depuis un point de surveillance, POM, un message de demande d'informations sur une interface de communication interne d'un réseau de communication, le message de demande d'informations incluant des paramètres d'informations de rapport d'événement incluant :
- des informations identifiant une cible de surveillance ; et
- au moins un type d'événement pour lequel une agence publique, PA, a demandé de recevoir une notification de survenance associée à la cible de surveillance, dans lequel l'au moins un type d'événement est au moins l'une parmi une détection de pollution, une détection de matériau explosif, une détection de matériau inflammable, une détection d'émission de gaz naturel, une détection de fuite toxique, une détection de déversement, de dégradation ou de contamination toxique, et une détection de drogue ;
- recevoir des données d'événement depuis au moins une fonction de détection électronique, ESF, sur une autre interface de communication interne du réseau de communication, des données d'événement incluant des emplacements de surveillance et des données de détection détectées au niveau d'emplacements de surveillance ;
- déterminer que des données d'événement reçues incluent un emplacement de surveillance correspondant à la cible de surveillance et des données de détection détectées au niveau dudit emplacement de surveillance correspondant à l'au moins un type d'événement pour lequel la PA a demandé de recevoir une notification de survenance ; et
- en réponse à ladite détermination, envoyer un message de notification d'événement au POM, le message de notification d'événement incluant des informations d'événement incluant :
- des informations identifiant l'emplacement de surveillance correspondant à la cible de surveillance ; et
- l'au moins un type d'événement détecté au niveau dudit emplacement de surveillance correspondant à l'au moins un type d'événement pour lequel la PA a demandé de recevoir une notification de survenance.

8. Dispositif de réseau de communication (300) selon la revendication 7, dans lequel le dispositif de réseau de communication est en outre fonctionnel pour :
- déterminer qu'un déclenchement d'une nouvelle collecte de données de détection par l'au moins une ESF est requis ; et
- en réponse à ladite détermination, envoyer un message de déclenchement de données de détection à l'au moins une ESF.

9. Dispositif de réseau de communication (300) selon la revendication 7 ou 8, dans lequel l'au moins une ESF est au moins l'une parmi une fonction de nez électronique, ENF, fonctionnelle pour recevoir des données d'odeur depuis un nez électronique, une fonction de langue électronique, ETF, fonctionnelle pour recevoir des données de goût depuis une langue électronique, et une fonction d'œil électronique, EEF, fonctionnelle pour recevoir des données visuelles depuis un œil électronique.

10. Système de surveillance (500, 600) comprenant un premier dispositif de réseau de communication (100, 610) hébergeant un élément de réseau, NE, de fonction d'administration de surveillance, M-ADMF, selon l'une quelconque des revendications 1 à 5, un deuxième dispositif de réseau de communication (200) hébergeant un élément de réseau, NE, de point de surveillance, POM, selon l'une quelconque des revendications 6 à 9, et un troisième dispositif de réseau de communication (300) hébergeant un élément de réseau, NE, de fonction de détection de données, DSF, selon l'une quelconque des revendications 7 à 9.

11. Système de surveillance (500, 600) selon la revendication 10, comprenant en outre au moins un quatrième dispositif de réseau de communication (400, 400(1), 400(2), 400(3)) hébergeant un élément de réseau de fonction de détection électronique, ESF, le quatrième dispositif de réseau de communication comprenant une circuiterie d'interface (402), au moins un processeur (404) et une mémoire (406) comprenant des instructions (410) exécutables par l'au moins un processeur, selon lesquelles le quatrième dispositif de réseau de communication est fonctionnel pour :
- recevoir des données de détection depuis un dispositif de détection ; et
- envoyer les données de détection et un emplacement de surveillance du dispositif de détection au NE DSF.

12. Système de surveillance (500, 600) selon la revendication 11, dans lequel l'ESF est l'une parmi une fonction de nez électronique, ENF, fonctionnelle pour recevoir des données d'odeur depuis un dispositif de détection à nez électronique, une fonction de langue électronique, ETF, fonctionnelle pour recevoir des données de goût depuis un dispositif de détection à langue électronique, et une fonction d'œil électronique, EEF, fonctionnelle pour recevoir des données visuelles depuis un dispositif de détection à œil électronique.

13. Procédé (700) de fonctionnement d'une fonction d'administration de surveillance, M-ADMF, le procédé comprenant les étapes suivantes :
- la réception (702), depuis une agence de sécurité publique, PA, d'un message de demande d'activation de surveillance (660) sur une interface de transfert intercellulaire d'un réseau de communication, le message de demande d'activation de surveillance incluant des paramètres d'informations de rapport d'événement incluant :
- des informations identifiant une cible de surveillance ; et
- au moins un type d'événement pour lequel la PA demande de recevoir une notification de survenance associée à la cible de surveillance, dans lequel l'au moins un type d'événement est au moins l'une parmi une détection de pollution, une détection de matériau explosif, une détection de matériau inflammable, une détection d'émission de gaz naturel, une détection de fuite toxique, une détection de déversement, de dégradation ou de contamination toxique, et une détection de drogue ; et
- l'envoi (704) d'un message d'activation de tâche (662) à un point de surveillance, POM, sur une première interface de communication interne du réseau de communication, le message d'activation de tâche incluant les paramètres d'informations de rapport d'événement reçus dans le message de demande d'activation de surveillance.

14. Procédé (800) de fonctionnement d'un point de surveillance, POM, le procédé comprenant les étapes suivantes :
- la réception (802), depuis une fonction d'administration de surveillance, M-ADMF, d'un message d'activation de tâche (662) sur une première interface de communication interne d'un réseau de communication, le message d'activation de tâche incluant des paramètres d'informations de rapport d'événement incluant :
- des informations identifiant une cible de surveillance ; et
- au moins un type d'événement pour lequel une agence de sécurité publique, PA, a demandé de recevoir une notification de survenance associée à la cible de surveillance, dans lequel l'au moins un type d'événement est au moins l'une parmi une détection de pollution, une détection de matériau explosif, une détection de matériau inflammable, une détection d'émission de gaz naturel, une détection de fuite toxique, une détection de déversement, de dégradation ou de contamination toxique, et une détection de drogue ;
- l'envoi (804) d'un message de demande d'informations d'événement (664) à une fonction de détection de données, DSF, du réseau de communication, le message de demande d'informations d'événement incluant les paramètres d'informations de rapport d'événement reçus dans le message d'activation de tâche ; et
- la réception (806) de messages de notification d'événement (680) depuis la DSF, les messages de notification d'événement incluant des informations d'événement incluant :
- des informations identifiant une cible de surveillance au niveau de laquelle au moins un événement a été détecté ; et
- au moins un type d'événement détecté au niveau de la cible de surveillance.

15. Procédé (900) de fonctionnement d'une fonction de détection de données, DSF, le procédé comprenant les étapes suivantes :
- la réception (902), depuis un point de surveillance, POM, d'un message de demande d'informations (664) sur une interface de communication interne d'un réseau de communication, le message de demande d'informations incluant des paramètres d'informations de rapport d'événement incluant :
- des informations identifiant une cible de surveillance ; et
- au moins un type d'événement pour lequel une agence de sécurité publique, PA, a demandé de recevoir une notification de survenance associée à la cible de surveillance, dans lequel l'au moins un type d'événement est au moins l'une parmi une détection de pollution, une détection de matériau explosif, une détection de matériau inflammable, une détection d'émission de gaz naturel, une détection de fuite toxique, une détection de déversement, de dégradation ou de contamination toxique, et une détection de drogue ;
- la réception (904) de données d'événement depuis au moins une fonction de détection électronique, ESF, sur une autre interface de communication interne du réseau de communication, des données d'événement incluant des emplacements de surveillance et des données de détection détectées au niveau d'emplacements de surveillance ;
- la détermination (906) que des données d'événement reçues incluent un emplacement de surveillance correspondant à la cible de surveillance et des données de détection détectées au niveau dudit emplacement de surveillance correspondant à l'au moins un type d'événement pour lequel la PA a demandé de recevoir une notification de survenance ; et
- en réponse à ladite détermination, l'envoi (908) d'un message de notification d'événement (680) au POM, le message de notification d'événement incluant des informations d'événement incluant :
- des informations identifiant l'emplacement de surveillance correspondant à la cible de surveillance ; et
- l'au moins un type d'événement détecté au niveau dudit emplacement de surveillance correspondant à l'au moins un type d'événement pour lequel la PA a demandé de recevoir une notification de survenance.
